# FASCICULE DE BREVET EUROPEEN

(11) **EP 3 176 083 B1**
(45) Date de publication et mention de la délivrance du brevet: **02.01.2019**
(21) Numéro de dépôt: 16200605.0
(22) Date de dépôt: 24.11.2016
(51) Int. Cl.: B64C 25/42, B64C 25/44, B60T 13/74

(54) **ARCHITECTURE DE SYSTEME DE FREINAGE POUR AERONEF**
AUFBAU EINES BREMSSYSTEMS FÜR EIN LUFTFAHRZEUG
ARCHITECTURE OF AN AIRCRAFT BRAKING SYSTEM

(30) Priorité: 01.12.2015 FR 1561681
(43) Date de publication de la demande: 07.06.2017
(73) Titulaire: Safran Landing System, 78140 Velizy-Villacoublay (FR)
(72) Inventeur: ONFROY, Dominique, 78140 VELIZY-VILLACOUBLAY (FR); GOYEZ, Brian, 78140 VELIZY-VILLACOUBLAY (FR); COUSTENOBLE, Steve, 78140 VELIZY-VILLACOUBLAY (FR); EVENOR, Eric, 78140 VELIZY-VILLACOUBLAY (FR)
(74) Mandataire: Lavaud, Thomas

(56) Documents cités:
- EP-A1- 1 498 332
- EP-A1- 1 739 010
- EP-A1- 2 316 701
- EP-A1- 2 719 592
- WO-A1-00/69721
- US-A1- 2008 149 436

## Description

### ARRIERE PLAN DE L'INVENTION

Dans les aéronefs, de nombreux systèmes embarqués intègrent des pièces mobiles qu'il convient de mettre en mouvement.

Parmi ces pièces mobiles, on trouve notamment des éléments de voilure (par exemple un aileron, un volet, un aérofrein), des éléments du train d'atterrissage (par exemple une jambe d'atterrisseur mobile entre une position étendue et une position rétractée, ou bien un poussoir d'un frein d'une roue qui coulisse en regard d'organes de friction du frein), des éléments permettant de mettre en oeuvre des turbines à géométrie variable, des éléments d'une pompe ou d'un mécanisme de dosage de carburant, des éléments des inverseurs de poussée, des éléments d'un mécanisme de pilotage du pas d'une hélice (par exemple sur hélicoptère ou turbopropulseur), etc.

Dans les aéronefs modernes, on utilise de plus en plus d'actionneurs électromécaniques pour mettre en mouvement ces pièces mobiles. Les avantages de l'utilisation d'actionneurs électromécaniques sont en effet nombreux : simplicité de la distribution électrique et du pilotage, flexibilité, simplification des opérations de maintenance, etc.

Un tel aéronef moderne est connu de EP 1 498 332 A1, qui est considéré comme l'art antérieur le plus proche et décrit les caractéristiques du préambule de la revendication 1. Un actionneur électromécanique comporte classiquement un organe d'actionnement mobile qui déplace la pièce mobile, un moteur électrique destiné à entraîner l'organe d'actionnement mobile et donc la pièce mobile, et un ou plusieurs capteurs de paramètres divers de l'actionneur électromécanique.

Un système embarqué d'actionnement électrique dans lequel est intégré un tel actionneur électromécanique met classiquement en oeuvre les fonctions suivantes : élaboration d'une consigne selon la fonction à réaliser (par exemple, une consigne en vitesse ou en position ou en force), mesure d'un ou de plusieurs paramètres d'asservissement de l'actionneur électromécanique (par exemple, la vitesse, la position, la force), exécution d'une boucle d'asservissement permettant à l'actionneur électromécanique d'atteindre la consigne, génération d'un courant électrique triphasé d'alimentation du moteur électrique, et transformation par le moteur électrique de l'énergie électrique en une énergie mécanique qui entraîne l'organe d'actionnement et donc la pièce mobile.

Généralement, les fonctions d'exécution de la boucle d'asservissement et de génération du courant électrique d'alimentation sont mises en oeuvre dans un ou plusieurs calculateurs centralisés : on parle alors d'une architecture centralisée.

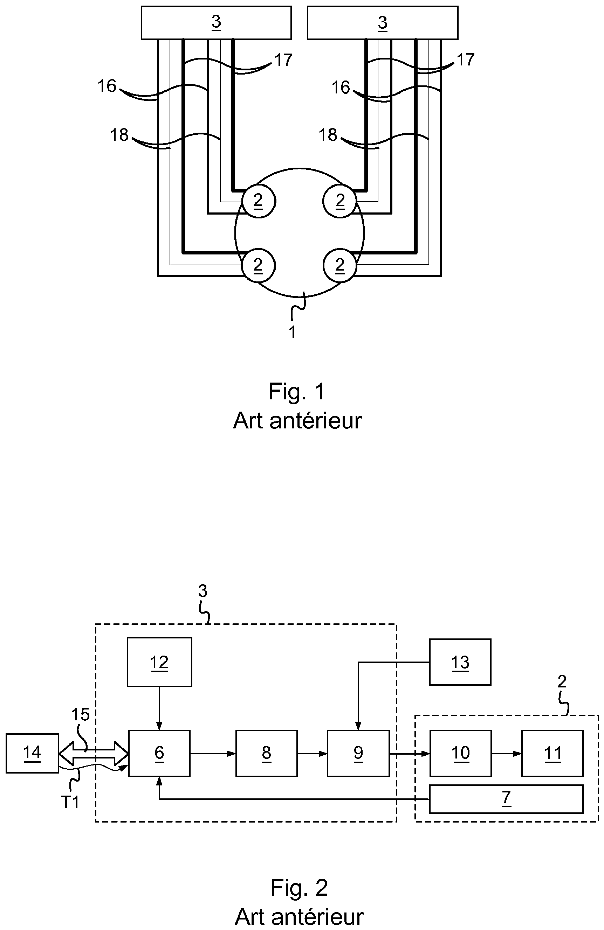

Ainsi, en référence à la figure 1, un frein d'aéronef connu 1 comporte quatre actionneurs électromécaniques de freinage 2 qui sont regroupés en deux groupes distincts de deux actionneurs électromécaniques 2. Les actionneurs électromécaniques 2 d'un groupe distinct sont connectés à un même calculateur centralisé 3 situé dans la soute de l'aéronef. Le moteur électrique de chaque actionneur électromécanique 2 reçoit un courant électrique triphasé d'alimentation du calculateur centralisé 3 auquel l'actionneur électromécanique 2 est connecté, et chaque actionneur électromécanique 2 transmet des mesures d'un paramètre d'asservissement au calculateur centralisé 3 (par exemple des mesures de position angulaire du rotor du moteur électrique).

En référence à la figure 2, on décrit maintenant plus en détail la génération du courant électrique triphasé d'alimentation de l'actionneur électromécanique 2 dans une telle architecture centralisée. Une consigne externe « de haut niveau » est générée par des moyens de génération de consigne externe 14 et est transmise à chaque calculateur centralisé 3 via un bus numérique 15 (transmission symbolisée par la référence T1 sur la figure 2). Dans le cas d'une architecture de système de freinage, cette consigne externe est représentative d'une demande de freinage générée par un pilote de l'aéronef. La consigne externe est transmise à des moyens de traitement 6 du calculateur centralisé 3. Les moyens de traitement 6 du calculateur centralisé 3 exécutent alors le contrôle et la commande de l'actionneur électromécanique 2 incluant une ou plusieurs boucles d'asservissement. L'actionneur électromécanique 2 transmet les mesures d'un paramètre d'asservissement (ou de plusieurs paramètres d'asservissement) réalisées par un capteur 7 au calculateur centralisé 3, lesdites mesures constituant le signal de retour de la boucle d'asservissement. Le signal de sortie de la boucle d'asservissement est transmis à un pilote de module de puissance 8 puis à un module de puissance 9 du calculateur centralisé 3 qui génère le courant électrique triphasé d'alimentation du moteur électrique 10 de l'actionneur électromécanique 2. Le moteur électrique 10 entraîne alors l'organe d'actionnement 11. La mise en oeuvre de la boucle d'asservissement nécessite des paramètres stockés dans une mémoire 12 du calculateur centralisé 3. Le module de puissance 9 (qui comprend par exemple un onduleur) du calculateur centralisé 3 est alimenté par une unité d'alimentation 13 externe au calculateur centralisé 3.

On note que cette architecture centralisée présente un certain nombre d'inconvénients. Tout d'abord, en référence à nouveau à la figure 1, on voit que l'architecture présentée nécessite l'utilisation de neuf fils électriques au moins par actionneur électromécanique 2 : trois fils d'alimentation 16 pour les trois phases du moteur électrique (symbolisés sur la figure 1 par un unique trait), quatre fils de communication 17 (symbolisés sur la figure 1 par un unique trait) pour remonter aux calculateurs centralisés 3 les mesures de position angulaire du rotor du moteur électrique 10, et deux fils d'alimentation 18 (symbolisés sur la figure 1 par un unique trait) pour alimenter un organe de blocage de l'actionneur électromécanique 2 permettant de mettre en oeuvre un freinage de parc. Ces fils électriques 16, 17, 18 sont intégrés dans des harnais qui cheminent depuis la soute de l'aéronef vers le frein 1 et qui sont donc encombrants et pesants. La longueur importante des harnais dans lesquels cheminent les fils d'alimentation 16 et donc les courants d'alimentation des moteurs électriques 10 imposent d'utiliser des circuits de filtrage des courants de mode commun qui augmentent la masse, la complexité et le coût des calculateurs 3.

### OBJET DE L'INVENTION

L'invention a pour objet de réduire l'encombrement, la masse, la complexité et le coût d'un système de freinage.

### RESUME DE L'INVENTION

En vue de la réalisation de ce but, on propose une architecture de système de freinage pour aéronef comportant :
- un frein destiné à freiner une roue de l'aéronef, le frein comportant des organes de friction et une pluralité d'actionneurs électromécaniques pour appliquer un effort de freinage sur les organes de friction et exercer ainsi un couple de freinage sur la roue, chaque actionneur électromécanique comportant un corps dans lequel sont intégrés un moteur électrique, un module de puissance pour générer un courant d'alimentation du moteur électrique et un module de communication numérique, les modules de communication numérique des actionneurs électromécaniques du frein étant interconnectés pour former un réseau numérique ;
- une unité d'alimentation destinée à alimenter les modules de puissance en leur fournissant une tension d'alimentation ;
- deux unités de commande adaptées à générer des signaux numériques de commande des moteurs électriques à destination des modules de communication numérique qui transmettent les signaux numériques de commande aux modules de puissance de sorte que chaque module de puissance génère le courant d'alimentation à partir de la tension d'alimentation et des signaux numériques de commande qui lui sont destinés ;
- un organe d'interconnexion réseau relié aux deux unités de commande et intégré dans le réseau numérique pour distribuer les signaux numériques de commande aux modules de communication numérique via le réseau numérique.

La génération des courants d'alimentation des moteurs électriques par les modules de puissances positionnés à l'intérieur des actionneurs électromécaniques permet de réduire le nombre de fils électriques circulant depuis la soute de l'aéronef vers le frein, et donc de réduire la masse et l'encombrement des harnais dans lesquels sont intégrés ces fils électriques. Comme le courant d'alimentation des moteurs ne circule plus dans ces harnais, l'utilisation de circuits de filtrage des courants de mode commun n'est par ailleurs plus nécessaire. On réduit ainsi la masse, la complexité et le coût des unités de commande.

On note de plus que la communalisation des fonctions de contrôle et l'agencement des modules de communication en un réseau numérique permettent d'intégrer (ou de supprimer) facilement un actionneur dans l'architecture. L'architecture est donc particulièrement souple et peut être utilisée sur différents programmes, ce qui réduit son coût.

D'autres caractéristiques et avantages de l'invention ressortiront à la lecture de la description qui suit de modes de réalisation particuliers, non limitatifs de l'invention.

### BREVE DESCRIPTION DES DESSINS

Il sera fait référence aux dessins annexés parmi lesquels :
- la figure 1 représente une architecture de système de freinage de l'art antérieur ;
- la figure 2 représente un système d'actionnement de l'art antérieur comprenant un calculateur centralisé et un actionneur électromécanique, le système d'actionnement étant destiné à être intégré dans l'architecture de la figure 1 ;
- la figure 3 représente une architecture de système de freinage selon un premier mode de réalisation de l'invention ;
- la figure 4 représente une architecture de système de freinage selon un deuxième mode de réalisation de l'invention ;
- la figure 5 représente un système d'actionnement selon un premier mode de réalisation destiné à être intégré dans l'une des architectures de l'invention ;
- la figure 6 représente un système d'actionnement selon un deuxième mode de réalisation destiné à être intégré dans l'une des architectures de l'invention ;
- la figure 7 représente un système d'actionnement selon un troisième mode de réalisation destiné à être intégré dans l'une des architectures de l'invention ;
- la figure 8 représente un système d'actionnement selon un quatrième mode de réalisation destiné à être intégré dans l'une des architectures de l'invention.

### DESCRIPTION DETAILLEE DE L'INVENTION

L'invention est ici mise en oeuvre sur un aéronef qui comporte une pluralité d'atterrisseurs principaux portant chacun une pluralité de roues dites « freinées », c'est à dire une pluralité de roues équipées d'un frein pour freiner l'aéronef. La présente description porte sur une unique roue freinée, mais l'invention s'applique bien sûr de la même manière à tout ou partie des roues freinées de l'aéronef.

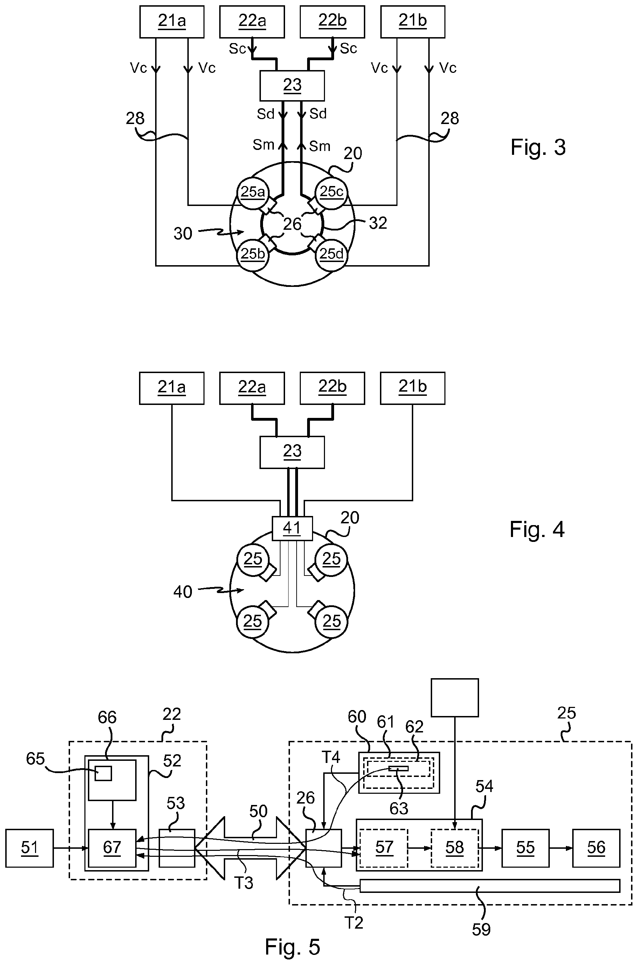

En référence à la figure 3, une architecture de système de freinage selon un premier mode de réalisation de l'invention comporte donc un frein 20 destiné à freiner une roue de l'aéronef, une première unité d'alimentation 21a, une deuxième unité d'alimentation 21b, une première unité de commande 22a, une deuxième unité de commande 22b et un commutateur réseau 23 (ou « switch »). On note ici qu'il serait parfaitement possible, à la place du commutateur réseau, d'utiliser un organe d'interconnexion réseau différent, tel qu'un routeur ou un concentrateur (ou « hub »).

Le frein 20 comporte un porte-actionneurs sur lequel sont montés quatre actionneurs électromécaniques de freinage 25a, 25b, 25c, 25d et des organes de friction, en l'occurrence une pile de disques de carbone.

Les quatre actionneurs électromécaniques 25 sont utilisés pour appliquer un effort de freinage sur la pile de disques de carbone et exercer ainsi un couple de freinage sur la roue qui ralentit la rotation de la roue et donc freine l'aéronef lorsque celui-ci est au sol.

Chaque actionneur électromécanique 25 comporte un corps fixé au porte-actionneurs, un poussoir et un organe de blocage adapté à bloquer en position le poussoir. Un moteur électrique, un module de puissance et un module de communication numérique 26 sont intégrés à l'intérieur du corps de chaque actionneur électromécanique 25.

Le poussoir est actionné par le moteur électrique pour coulisser et appliquer l'effort de freinage sur la pile de disques de carbone.

Le module de puissance permet de générer un courant d'alimentation alternatif qui circule dans trois phases du moteur électrique lorsqu'il convient d'actionner le poussoir et donc de freiner la roue. Le module de puissance comporte à cet effet un onduleur comprenant une pluralité d'interrupteurs qui sont commandés de manière à transformer une tension d'alimentation continue Vc en une tension alternative triphasé sous laquelle est généré le courant d'alimentation du moteur électrique.

Les tensions d'alimentation Vc reçues par les modules de puissance des quatre actionneurs électromécaniques 25 du frein 20 proviennent de la première unité d'alimentation 21a et de la deuxième unité d'alimentation 21b.

Les quatre actionneurs électromécaniques 25 sont regroupés en un premier groupe et un deuxième groupe distincts, le premier groupe comprenant les actionneurs électromécaniques 25a et 25b et le deuxième groupe comprenant les actionneurs électromécaniques 25c et 25d.

La première unité d'alimentation 21a fournit la tension d'alimentation Vc aux modules de puissance des actionneurs électromécaniques 25a et 25b du premier groupe, alors que la deuxième unité d'alimentation 21b fournit la tension d'alimentation aux modules de puissance des actionneurs électromécaniques 25c et 25d du deuxième groupe.

Pour recevoir la tension d'alimentation Vc, chaque actionneur électromécanique 25 est connecté par deux fils électriques d'alimentation 28 à la première unité d'alimentation 21a ou à la deuxième unité d'alimentation 21b.

La première unité d'alimentation 21a et la deuxième unité d'alimentation 21b sont positionnées en soute, dans le fuselage de l'aéronef, en haut de l'atterrisseur.

Le module de puissance de chaque actionneur électromécanique 25 utilise par ailleurs un signal numérique de commande Sc pour commander les interrupteurs de l'onduleur.

Les signaux numériques de commande Sc des quatre actionneurs électromécaniques 25 sont générés par la première unité de commande 22a et par la deuxième unité de commande 22b.

Cette fois, chaque unité de commande 22 génère des signaux numériques de commande Sc à destination de deux ou quatre actionneurs électromécaniques 25. La première unité de commande 22a et la deuxième unité de commande 22b sont donc redondées, de sorte que la perte de l'une des deux unités de commande 22 ne mène pas à la perte totale du freinage.

La première unité de commande 22a et la deuxième unité de commande 22b sont positionnées en soute, dans le fuselage de l'aéronef, en haut de l'atterrisseur.

La distribution des signaux numériques de commande Sc aux modules de puissance des quatre actionneurs électromécaniques 25 est réalisée via les modules de communication numérique 26 des quatre actionneurs électromécaniques 25, chaque module de communication numérique 26 d'un actionneur électromécanique 25 transmettant au module de puissance et donc à l'onduleur du module de puissance dudit actionneur électromécanique 25 les signaux numériques de commande Sc qui lui sont destinés.

Les modules de communication numérique 26 des quatre actionneurs électromécaniques 25 sont interconnectés pour former un réseau numérique 30 (par réseau numérique, on entend donc ici un ensemble de dispositifs communicants interconnectés et échangeant des données sous forme de signaux numériques). Le réseau numérique 30 présente ici une topologie en anneau.

Le commutateur réseau 23, qui est connecté à la première unité de commande 22a et à la deuxième unité de commande 22b, est intégré dans le réseau numérique 30.

Le commutateur réseau 23 est ainsi connecté aux modules de communication numérique 26 de deux actionneurs électromécaniques du frein 25a et 25c, de manière à constituer lui aussi l'une des entités formant la boucle fermée du réseau numérique 30 en anneau, les modules de communication numérique 26 des quatre actionneurs électromécaniques 25 constituant les autres entités. Chaque entité (module de communication numérique 26 ou commutateur réseau 23) du réseau numérique 30 est reliée par quatre fils électriques de communication 32 à deux entités distinctes.

Le commutateur réseau 23 gère le fonctionnement du réseau numérique 30 en distribuant les signaux numériques de commande Sc provenant de la première unité de commande 22a et de la deuxième unité de commande 22b aux modules de communication numérique 26 via le réseau numérique 30.

Le commutateur réseau 23 est ici positionné avec la première unité de commande 22a et avec la deuxième unité de commande 22b dans un même boîtier (qui est donc positionné en soute, dans le fuselage de l'aéronef, en haut de l'atterrisseur) .

Ainsi, la transmission aux modules de communication numérique 26 et donc aux modules de puissance des signaux numériques de commande Sc provenant des unités de commande 22, et l'alimentation des modules de puissance par les tensions d'alimentation Vc provenant des unités d'alimentation 21 nécessitent seize fils électriques qui cheminent depuis le haut de l'atterrisseur vers le frein 20, au lieu des trente-six fils électriques de l'architecture de la figure 1 (voire plus dans le cas où l'actionneur intègre d'autres organes : autres capteurs, etc.).

On note que le réseau numérique 30 qui vient d'être décrit n'est pas uniquement utilisé pour transmettre les signaux numériques de commande Sc aux modules de puissance des actionneurs électromécaniques 25.

Des signaux numériques montants Sm sont aussi transmis depuis le frein 20 vers les unités de commande 22 via le réseau numérique 30 et donc via le commutateur réseau 23.

Les signaux numériques montants Sm comportent tout d'abord des signaux numériques de mesure émis par les modules de communication numérique 26 et provenant de capteurs intégrés dans les actionneurs électromécaniques 25. Les signaux numériques de mesure sont ici des signaux de mesure de position angulaire des rotors des moteurs électriques, des signaux de mesure des courants d'alimentation des moteurs électriques, et des signaux de mesure d'effort produit par l'organe d'actionnement des actionneur électromécaniques 25.

Les signaux de mesure de position angulaire proviennent, pour chaque actionneur électromécanique 25, d'un capteur de position angulaire intégré dans ledit actionneur électromécanique 25.

Les signaux de mesure de courant proviennent, pour chaque actionneur électromécanique 25, d'un capteur de courant intégré dans ledit actionneur électromécanique 25.

Les signaux de mesure d'effort proviennent, pour chaque actionneur électromécanique 25, d'un capteur d'effort intégré dans ledit actionneur électromécanique 25.

Les signaux de mesure de position angulaire, de courant et d'effort sont numérisés par les modules de communication 26, émis sur le réseau numérique 30 et utilisés par les unités de commande 22 pour générer les signaux numériques de commande Sc et piloter les moteurs électriques des quatre actionneurs électromécaniques 25.

Les signaux numériques montants Sm comportent ensuite des signaux de surveillance des actionneurs électromécaniques 25 émis par les modules de communication numérique 26.

Les signaux de surveillance des actionneurs électromécaniques 25 sont destinés à fournir un état des actionneurs électromécaniques 25 à partir duquel les unités de commande 22 peuvent éventuellement prendre la décision de commander une opération de maintenance, ou bien de désactiver entièrement ou partiellement un ou plusieurs actionneurs électromécaniques 25.

Enfin, les signaux numériques montants Sm comportent des signaux de mesure transmis aux actionneurs électromécaniques par un capteur externe situé sur la roue ou bien sur le frein (non représenté sur la figure 3). Le capteur externe est ici un tachymètre destiné à mesurer une vitesse de rotation de la roue. Le capteur externe est intégré dans le réseau numérique 30 (il forme lui aussi une entité du réseau numérique en anneau). Il comprend une interface numérique qui, comme les modules de communication numérique 26 précédemment évoqués, permet au capteur externe de transmettre les mesures de vitesse de rotation de la roue aux unités de commande 22 via le réseau numérique 30.

Par ailleurs, outre les signaux numériques de commande Sc, des signaux numériques descendants additionnels Sd sont transmis depuis les unités de commande 22 vers le frein 20 via le réseau numérique 30.

Les signaux numériques descendants additionnels Sd comportent tout d'abord des signaux d'ordre de test fonctionnel et des signaux d'ordre de sanction des actionneurs électromécaniques 25.

Les signaux d'ordre de test fonctionnel déclenchent l'exécution de tests fonctionnels par les actionneurs électromécaniques 25 en vue d'établir des diagnostics relatifs au fonctionnement des actionneurs électromécaniques 25 (et, éventuellement, relatifs à l'efficacité des communications depuis et à destination des actionneurs électromécaniques 25).

Les signaux d'ordre de sanction permettent aux unités de commande 22 de « sanctionner » un actionneur électromécanique 25 en le désactivant entièrement ou partiellement, ou bien en excluant son module de communication numérique 26 du réseau numérique 30.

Les signaux numériques descendants additionnels Sd comportent aussi des signaux de pilotage d'un autre équipement monté sur la roue, en l'occurrence ici d'un ventilateur du frein (non représenté sur la figure 3). Le ventilateur du frein est intégré dans le réseau numérique 30 (il forme lui aussi une entité du réseau numérique en anneau). Il comprend une interface numérique qui, comme les modules de communication numérique 26 précédemment évoqués, permet au ventilateur du frein de recevoir les signaux de pilotage provenant des unités de commande 22 via le réseau numérique 30.

Dans l'architecture de système de freinage selon un deuxième mode de réalisation de l'invention, visible sur la figure 4, le réseau numérique est cette fois un réseau numérique en étoile 40.

Le commutateur réseau 23 forme un noeud du réseau numérique en étoile 40 auquel sont reliés tous les actionneurs électromécaniques 25 du frein 20.

On note que l'architecture de système de freinage selon le deuxième mode de réalisation de l'invention comporte, outre les quatre actionneurs électromécaniques 25, les deux unités d'alimentation 21, les deux unités de commande 22 et le commutateur réseau 23, un boîtier de connexion 41 monté sur le porte-actionneurs du frein 20.

Les quatre actionneurs électromécaniques 25, les deux unités d'alimentation 21, les deux unités de commande 22 et le commutateur réseau 23 sont reliés au boîtier de connexion 41.

Le boîtier de connexion 41 reçoit les tensions d'alimentation continues et les signaux numériques descendants évoqués précédemment, et les distribue aux actionneurs électromécaniques 25 ainsi qu'au tachymètre et au ventilateur de frein. Le boîtier de connexion 41 reçoit aussi les signaux numériques montants évoqués précédemment, et les distribue au commutateur réseau 23 qui les transmet aux deux unités de commande 22.

Avantageusement, et quel que soit le mode de réalisation de l'architecture de système de freinage, l'organe de blocage de chaque actionneur électromécanique 25 est lui aussi intégré au réseau numérique 30 ou 40. L'organe de blocage est alors alimenté localement à partir de la tension d'alimentation reçue par l'actionneur électromécanique 25 et provenant de l'une des unités d'alimentation 21. L'organe de blocage reçoit des ordres de pilotage via le réseau numérique 30, 40 et émet un statut sur le réseau numérique 30, 40.

On décrit désormais plus en détail la manière dont chaque unité de commande 22 commande l'un des quatre actionneurs électromécaniques 25, et donc génère les signaux numériques de commande Sc à destination de cet actionneur électromécanique 25.

En référence à la figure 5, on considère que l'une des deux unités de commande 22 et l'un des quatre actionneurs électromécaniques 25 forment un système d'actionnement selon un premier mode de réalisation qui, outre l'unité de commande 22 et l'actionneur électromécanique 25, comporte un canal de transmission numérique 50 qui relie l'unité de commande 22 et l'actionneur électromécanique 25. Ce qui suit s'applique bien sûr aux deux unités de commande 22 et aux quatre actionneurs électromécaniques 25 décrits plus tôt.

Dans les architectures de système de freinage des figures 3 et 4, le canal de transmission numérique 50 est formé par les fils électriques qui relient l'unité de commande 22 au commutateur réseau 23, par le commutateur réseau 23, par le boîtier de connexion 41 en ce qui concerne la figure 4, et par les différents éléments du réseau numérique (fils électriques, modules de communication 26 d'autres actionneurs électromécaniques 25) qui séparent le module de communication numérique 26 de l'actionneur électromécanique 25 en question du commutateur réseau 23.

L'unité de commande 22 comporte des moyens de traitement 52 et une interface de communication numérique 53.

Comme on l'a vu plus tôt, l'actionneur électromécanique 25 comporte un module de communication 26, un module de puissance 54, un moteur électrique 55, un poussoir 56 et des moyens de mesure 59 comprenant des capteurs (capteur de courant, capteur de position angulaire et capteur d'effort). Le module de puissance 54 comporte un pilote d'onduleur 57 et un onduleur 58.

L'actionneur électromécanique 25 comporte de plus une mémoire non volatile 60 dans laquelle sont stockées des données mémorisées 61 comportant des données de configuration 62 propres à l'actionneur électromécanique 25.

Les données de configuration 62 comportent des paramètres d'asservissement 63 propres à l'actionneur électromécanique 25 dont le rôle est expliqué ci-après.

La mémoire non volatile 60, programmée au cours de la fabrication de l'actionneur électromécanique 25, est compatible avec les conditions environnementales (température, vibrations, chocs, perturbations électromagnétiques, etc.) subies par l'actionneur électromécanique 25 qui est monté sur un porte-actionneurs du frein. La mémoire non volatile 60 est avantageusement intégrée dans un composant semi-conducteur du module de communication numérique 26.

La position angulaire mesurée par le capteur de position angulaire de l'actionneur électromécanique 25 et le courant mesuré par le capteur de courant de l'actionneur électromécanique 25 constituent des grandeurs d'asservissement de l'actionneur électromécanique 25.

Les moyens de mesure 59 convertissent les mesures des grandeurs d'asservissement en signaux numériques de mesure représentatifs des grandeurs d'asservissement.

Pour commander l'actionneur électromécanique 25, les moyens de traitement 52 de l'unité de commande 22 exécutent un algorithme d'asservissement 67 dont le code exécutable 65 est stocké dans une mémoire 66 des moyens de traitement 52.

L'algorithme d'asservissement 67 met en oeuvre trois boucles d'asservissement destinées à piloter le module de puissance 54 de l'actionneur électromécanique 25 via le canal numérique 50 : une boucle d'asservissement en courant/couple, une boucle d'asservissement en vitesse et une boucle d'asservissement en position.

Chaque boucle d'asservissement a pour signal de consigne une consigne générée par des moyens externes de génération de consigne 51.

Les trois boucles d'asservissement sont imbriquées : la sortie d'une boucle d'asservissement est l'entrée d'une autre boucle.

La boucle d'asservissement en position reçoit une consigne générée par les moyens externes de génération de consigne 51. La boucle d'asservissement en position émet une consigne à la boucle d'asservissement en vitesse qui en émet une à la boucle d'asservissement en courant/couple.

La boucle d'asservissement en courant/couple a pour signal de retour le signal numérique de mesure représentatif du courant, et les boucles d'asservissement en vitesse et en position ont pour signaux de retour les signaux de mesure représentatifs de la position angulaire. Les signaux de retour sont transmis par le module de communication 26 de l'actionneur électromécanique 25 à l'unité de commande 22 via le canal de transmission numérique 50(transmission T2 sur la figure 5).

La boucle d'asservissement en courant/couple produit un signal numérique de commande du moteur électrique 55 à destination du module de puissance 54 (transmission T3 sur la figure 5). Le signal numérique de commande comporte en l'occurrence un rapport cyclique permettant de piloter des interrupteurs de l'onduleur 58.

Les signaux numériques de commande sont transmis au module de puissance 54 de l'actionneur électromécanique 25 via l'interface numérique 53 de l'unité de commande 22, le canal de transmission numérique 50 et le module de communication numérique 26 de l'actionneur électromécanique 25 (transmission T3 sur la figure 5). Le pilote d'onduleur 57 du module de puissance 54 pilote alors l'onduleur 58 qui génère un courant d'alimentation du moteur électrique 55 pour entraîner le poussoir 56 de l'actionneur électromécanique 25 conformément à la consigne.

La mise en oeuvre des boucles d'asservissement utilise les paramètres d'asservissement 63 propres à l'actionneur électromécanique 25, qui comportent ici un coefficient proportionnel, un coefficient intégral et un coefficient dérivé, et une limitation en position, une limitation en vitesse et une limitation en courant de l'actionneur électromécanique 25.

Avant l'utilisation de l'actionneur électromécanique 25, par exemple au moment de la mise sous tension de l'unité de commande 22 et de l'actionneur électromécanique 25, les moyens de traitement 52 de l'unité de commande 22 acquièrent les paramètres d'asservissement 63 stockés dans la mémoire non volatile 60 de l'actionneur électromécanique 25 et les intègrent dans les boucles d'asservissement (transmission T4 sur la figure 5). Les moyens de traitement 52 disposent alors de l'intégralité des données nécessaire pour exécuter l'algorithme d'asservissement 67 et les boucles d'asservissement.

Ainsi, tout changement dans la conception de l'actionneur électromécanique 25 nécessitant une modification des paramètres d'asservissement 63 propres à l'actionneur électromécanique 25 peut être mis en oeuvre uniquement en stockant les nouveaux paramètres d'asservissement 63 dans la mémoire non volatile 60 de l'actionneur électromécanique 25, et donc sans modifier l'unité de commande 22. Les coûts liés à ce changement dans la conception de l'actionneur électromécanique 25 sont donc réduits.

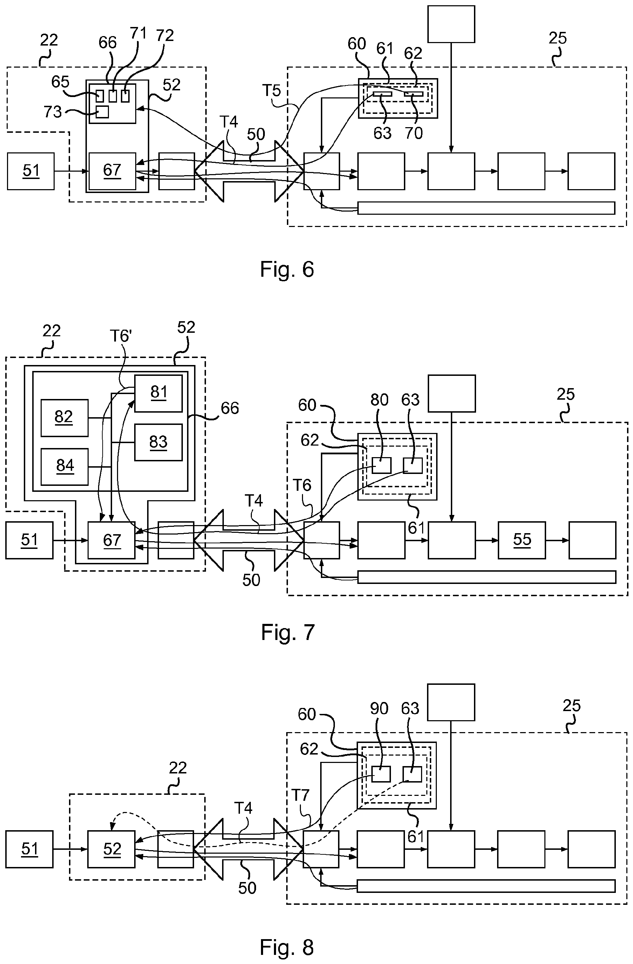

En référence à la figure 6, le système d'actionnement selon un deuxième mode de réalisation comprend à nouveau l'unité de commande 22, l'actionneur électromécanique 25 et le canal de transmission numérique 50.

La mémoire non volatile 60 de l'actionneur électromécanique 25 du système d'actionnement selon le deuxième mode de réalisation est aussi utilisée pour paramétrer d'autres algorithmes.

Ainsi, les données de configuration 62 des données mémorisées 61 stockées dans la mémoire non volatile 60 comportent, outre les paramètres d'asservissement 63 de l'algorithme d'asservissement 67, des paramètres 70 d'un algorithme de détection de panne 71, d'un algorithme de suivi de tendance 72 et d'un algorithme de comptage de cycles 73.

L'algorithme de détection de panne 71, l'algorithme de suivi de tendance 72 et l'algorithme de comptage de cycle 73 sont stockés dans la mémoire 66 des moyens de traitement 52 de l'unité de commande 22. Lorsque qu'il convient d'exécuter l'un de ces algorithmes 71, 72, 73, l'unité de commande 22 acquiert les paramètres 70 correspondant (transmission T5 sur la figure 6).

En référence à la figure 7, le système d'actionnement selon un troisième mode de réalisation comprend à nouveau l'unité de commande 22, l'actionneur électromécanique 25 et le canal de transmission numérique 50.

La mémoire non volatile 60 de l'actionneur électromécanique 25 du système d'actionnement selon le troisième mode de réalisation est aussi utilisée pour stocker un identifiant 80 d'un algorithme d'asservissement à utiliser pour l'actionneur électromécanique 25.

Ainsi, les données de configuration 62 des données mémorisées 61 stockées dans la mémoire non volatile 60 comportent un identifiant 80 qui permet aux moyens de traitement 52 de l'unité de commande 22 de sélectionner l'algorithme d'asservissement à utiliser parmi une liste d'algorithmes d'asservissement mémorisés dans la mémoire 66 des moyens de traitement 52.

La liste d'algorithmes d'asservissement comporte un algorithme d'asservissement 81 pour un actionneur électromécanique ayant un moteur à courant alternatif, un algorithme d'asservissement 82 pour un actionneur électromécanique ayant un moteur à courant continu, un algorithme d'asservissement 83 pour un actionneur électromécanique ayant un moteur couple, un algorithme d'asservissement 84 pour un actionneur électromécanique ayant un moteur pas à pas.

Le moteur électrique 55 de l'actionneur électromécanique 25 est ici un moteur à courant alternatif. Ainsi, avant l'utilisation de l'actionneur électromécanique 25, par exemple au moment de la mise sous tension de l'unité de commande 22 et de l'actionneur électromécanique 25, les moyens de traitement 52 de l'unité de commande 22 acquièrent l'identifiant 80 stocké dans la mémoire non volatile 60 de l'actionneur électromécanique 25 (transmissions T6 et T6' sur la figure 7). Les moyens de traitement 52 sélectionnent et exécutent alors l'algorithme d'asservissement 81 pour un actionneur électromécanique ayant un moteur à courant alternatif.

Ainsi, un changement de technologie du moteur électrique 55 de l'actionneur électromécanique 25 qui nécessite d'utiliser un algorithme d'asservissement différent préalablement stocké dans la mémoire 66 des moyens de traitement 52 peut être mis en oeuvre uniquement en stockant le nouvel identifiant dans la mémoire non volatile 60 de l'actionneur électromécanique 25 sans modifier l'unité de commande 22.

En référence à la figure 8, le système d'actionnement selon un quatrième mode de réalisation comprend à nouveau l'unité de commande 22, un actionneur électromécanique 25 et un canal de transmission numérique 50.

La mémoire non volatile 60 de l'actionneur électromécanique 25 du système d'actionnement selon le quatrième mode de réalisation est aussi utilisée pour stocker un code exécutable 90 d'un algorithme d'asservissement déjà paramétré de l'actionneur électromécanique 25.

Ainsi, avant l'utilisation de l'actionneur électromécanique 25, par exemple au moment de la mise sous tension de l'unité de commande 22 et de l'actionneur électromécanique 25, les moyens de traitement 52 de l'unité de commande 22 acquièrent le code exécutable 90 de l'algorithme d'asservissement dans la mémoire non volatile (transmissions T7 sur la figure 8).

La conception de l'unité de commande 22 ne nécessite donc pas une définition préalable de l'algorithme d'asservissement.

On note ici que le code exécutable de tout type d'algorithme peut être stocké dans la mémoire non volatile 60, et pas uniquement le code exécutable d'un algorithme d'asservissement (par exemple, le code exécutable d'un algorithme de détection de panne et/ou d'un algorithme de suivi de tendance et/ou d'un algorithme de comptage de cycles).

Avantageusement, et quel que soit le mode de réalisation du système d'actionnement précédemment décrit, la mémoire non volatile 60 de l'actionneur électromécanique 25 peut être utilisée pour stocker des données de configuration comportant des données de calibration de l'actionneur électromécanique 25. Les données de calibration peuvent être utilisées par l'unité de commande 22 pour corriger un ou des signaux de consigne des boucles d'asservissement ou bien des signaux numériques de mesure. Les données de calibration sont par exemple des données permettant une correction en pente, une correction d'offset, ou bien une correction en fonction de paramètres mesurés par les capteurs de l'actionneur électromécanique 25.

Le stockage des données de calibration dans la mémoire non volatile 60 de l'actionneur électromécanique 25 permet de simplifier la mise au point de l'actionneur électromécanique 25 lors de sa conception et de sa fabrication, et donc de réduire les coûts de conception et de fabrication de l'actionneur électromécanique 25. On améliore par ailleurs les performances du système en calibrant l'actionneur électromécanique 25 à l'aide des données de calibration.

Avantageusement, et quel que soit le mode de réalisation du système d'actionnement précédemment décrit, la mémoire non volatile 60 peut contenir des données fournies par l'unité de commande 22. La mémoire non volatile 60 est dans ce cas accessible en lecture et en écriture par l'unité de commande 22. Les données mémorisées cheminent entre l'actionneur électromécanique 25 et l'unité de commande 22 par le canal de transmission 50, quel que soit le sens de ce cheminement.

Les données fournies par l'unité de commande 22 comportent ici des informations d'usage de l'actionneur électromécanique 25, qui sont produites à partir d'autres données mémorisées dans la mémoire non volatile 60 de l'actionneur électromécanique 25, ou bien qui sont obtenues par l'exécution d'un algorithme quelconque par l'unité de commande 22.

En stockant les informations d'usage qui concernent l'actionneur électromécanique 25 dans sa mémoire non volatile 60, on facilite les opérations de maintenance à venir. Un opérateur de maintenance aura accès aux informations d'usage de l'actionneur électromécanique 25 sans qu'il soit nécessaire de configurer selon une configuration de maintenance particulière l'unité de commande 22 ou l'actionneur électromécanique 25. De même, on facilite les opérations de réparation à venir. Un opérateur de réparation aura accès aux informations d'usage de l'actionneur électromécanique 25 sans qu'il soit nécessaire de transférer des données provenant de l'unité de commande 22.

Avantageusement, et quel que soit le mode de réalisation du système d'actionnement précédemment décrit, la mémoire non volatile 60 peut contenir d'autres information utiles à l'algorithme d'asservissement, à la surveillance, à la maintenance, à la production et à la livraison de l'actionneur électromécanique 25. Parmi ces autres informations, on peut citer par exemple la référence ou le numéro de série de l'actionneur électromécanique 25.

Ces informations peuvent notamment être utilisées lors de la phase d'initialisation de l'actionneur électromécanique 25.

Avantageusement, et quel que soit le mode de réalisation du système d'actionnement précédemment décrit, le stockage des données mémorisées 61 dans la mémoire non volatile 60 est protégé par un outil de contrôle de type contrôle de redondance cyclique qui assure l'intégrité des données mémorisées 61 et la détection d'une corruption de ces données mémorisées.

Avantageusement, et quel que soit le mode de réalisation du système d'actionnement précédemment décrit, le canal de transmission 50 est constitué par un canal rapide et par un canal lent.

Les données numériques qui nécessitent une transmission rapide (de type transmission en temps réel) transitent par le canal rapide. Il s'agit notamment des signaux numériques de commande et des signaux numériques de mesure utilisés dans les boucles d'asservissement.

Les données numériques qui ne nécessitent pas une transmission rapide transitent par le canal lent. Il s'agit notamment des données mémorisées 61 de la mémoire non volatile 60 lors de l'écriture ou de la lecture de ces données mémorisées 61.

Les données mémorisées 61 peuvent par ailleurs être accessibles en lecture et/ou en écriture par un dispositif d'interrogation sans fil utilisant une technologie de type RFID. Cet accès sans fil est particulièrement intéressant pour réaliser des opérations de maintenance sur l'actionneur électromécanique 25.

Avantageusement, le module de communication comporte un composant de type ASIC qui peut être développé pour plusieurs types d'actionneurs électromécaniques, ce qui réduit les coûts dits « non-récurrents » de développement de ces actionneurs électromécaniques.

L'invention n'est pas limitée aux modes de réalisation particuliers qui viennent d'être décrits, mais, bien au contraire, couvre toute variante entrant dans le cadre de l'invention tel que défini par les revendications.

Bien que l'on ait indiqué que le capteur externe est un tachymètre, il est parfaitement possible de prévoir un ou plusieurs capteurs externes différents, par exemple un capteur de température de la pile de disques (typiquement un thermocouple), ou un capteur de pression d'un pneumatique de la roue, ou encore un capteur de couple de freinage.

Bien que l'on ait décrit ici que chaque actionneur électromécanique comporte une mémoire non volatile dans laquelle sont stockées les données de configuration et les paramètres d'asservissement, les mémoires non volatiles peuvent parfaitement être intégrées dans les unités de commande.

## Revendications

1. Architecture de système de freinage pour aéronef, comportant :
- un frein (20) destiné à freiner une roue de l'aéronef, le frein comportant des organes de friction et une pluralité d'actionneurs électromécaniques (25) pour appliquer un effort de freinage sur les organes de friction et exercer ainsi un couple de freinage sur la roue, chaque actionneur électromécanique (25) comportant un corps dans lequel est intégré un moteur électrique,
**caractérisé en ce que**
- dans le corps sont intégrés un module de puissance pour générer un courant d'alimentation du moteur électrique et un module de communication numérique (26), les modules de communication numérique des actionneurs électromécaniques du frein étant interconnectés pour former un réseau numérique (30 ; 40) ;
et l'architecture de système de freinage comporte en outre:
- une unité d'alimentation (21) destinée à alimenter les modules de puissance en leur fournissant une tension d'alimentation (Vc) ;
- deux unités de commande (22a, 22b) adaptées à générer des signaux numériques de commande (Sc) des moteurs électriques à destination des modules de communication numérique qui transmettent les signaux numériques de commande aux modules de puissance de sorte que chaque module de puissance génère le courant d'alimentation à partir de la tension d'alimentation et des signaux numériques de commande qui lui sont destinés ;
- un organe d'interconnexion réseau (23) relié aux deux unités de commande et intégré dans le réseau numérique pour distribuer les signaux numériques de commande aux modules de communication numérique via le réseau numérique.

2. Architecture selon la revendication 1, dans laquelle l'organe d'interconnexion réseau est un commutateur ou un routeur ou un concentrateur.

3. Architecture selon la revendication 1, dans laquelle chaque module de puissance comporte un onduleur.

4. Architecture selon la revendication 1, dans laquelle le réseau numérique (30) est un réseau en anneau et dans laquelle l'organe d'interconnexion réseau (23) et les modules de communication numérique (26) sont des entités du réseau en anneau.

5. Architecture selon la revendication 1, dans laquelle le réseau numérique (40) est un réseau en étoile, et dans laquelle l'organe d'interconnexion réseau (23) est un noeud du réseau en étoile.

6. Architecture selon la revendication 5, comportant en outre un boîtier de connexion (41) monté sur le frein et auquel sont connectés l'organe d'interconnexion réseau, l'unité d'alimentation, les modules de puissance et les modules de communication numérique.

7. Architecture selon l'une des revendications précédentes, dans laquelle les deux unités de commande (22a, 22b) et l'organe d'interconnexion réseau (23) sont situés dans un même boîtier.

8. Architecture selon l'une des revendications précédentes, comportant deux unités d'alimentation (21a, 21b), chaque unité d'alimentation étant destinée à alimenter un groupe distinct de modules de puissance.

9. Architecture selon l'une des revendications précédentes, dans laquelle des signaux numériques montants (Sm) sont transmis depuis le frein vers les unités de commande via le réseau numérique.

10. Architecture selon la revendication 9, dans laquelle les signaux numériques montants comportent des signaux de mesure émis par les modules de communication numérique et provenant de capteurs intégrés dans les actionneurs électromécaniques.

11. Architecture selon la revendication 10, dans laquelle les capteurs intégrés comprennent des capteurs de position angulaire des rotors des moteurs électriques et/ou des capteurs des courants d'alimentation des moteurs électriques et/ou des capteurs d'effort.

12. Architecture selon la revendication 9, dans laquelle les signaux numériques montants comportent des signaux de surveillance des actionneurs électromécaniques émis par les modules de communication numérique.

13. Architecture selon la revendication 9, dans laquelle les signaux numériques montants comportent des signaux de mesure émis par un capteur externe aux actionneurs électromécaniques situé sur la roue et/ou le frein et intégré dans le réseau numérique.

14. Architecture selon la revendication 13, dans laquelle le capteur externe comporte un capteur d'une température des organes de friction du frein et/ou un capteur d'une pression d'un pneumatique de la roue et/ou un capteur d'une vitesse de rotation de la roue et/ou un capteur de couple de freinage.

15. Architecture selon la revendication 9, dans laquelle les signaux numériques montants comportent des signaux de statut émis par des organes de blocage des actionneurs électromécaniques qui sont intégrés dans le réseau numérique.

16. Architecture selon l'une des revendications précédentes, dans laquelle, outre les signaux numériques de commande, des signaux numériques descendants additionnels (Sd) sont transmis depuis les unités de commande vers le frein via le réseau numérique.

17. Architecture selon la revendication 16, dans laquelle les signaux numériques descendants additionnels comportent des signaux d'ordre de test fonctionnel et/ou des signaux d'ordre de sanction des actionneurs électromécaniques.

18. Architecture selon la revendication 17, dans laquelle les signaux numériques descendants additionnels comportent des signaux de pilotage d'un autre équipement monté sur la roue et/ou le frein.

19. Architecture selon la revendication 18, dans laquelle l'autre équipement est un ventilateur du frein.

20. Architecture selon la revendication 16, dans laquelle les signaux numériques descendants additionnels comportent des signaux de pilotage d'organes de blocage des actionneurs électromécaniques qui sont intégrés dans le réseau numérique.

## Patentansprüche

1. Aufbau eines Bremssystems für ein Luftfahrzeug, umfassend:
- eine Bremse (20), die dazu bestimmt ist, ein Rad des Luftfahrzeugs zu bremsen, wobei die Bremse Reibelemente und eine Vielzahl von elektromechanischen Aktoren (25) umfasst, um auf die Reibelemente eine Bremskraft aufzubringen und so ein Bremsmoment auf das Rad auszuüben, wobei jeder elektromechanische Aktor (25) ein Gehäuse umfasst, in dem ein Elektromotor integriert ist, **dadurch gekennzeichnet, dass**
- in dem Gehäuse ein Leistungsmodul zum Erzeugen eines Versorgungsstroms zur Versorgung des Elektromotors und ein Modul (26) zur digitalen Kommunikation integriert sind, wobei die Module zur digitalen Kommunikation der elektromechanischen Aktoren der Bremse miteinander verbunden sind, um ein digitales Netz (30; 40) zu bilden;
und der Aufbau des Bremssystems ferner umfasst:
- eine Versorgungseinheit (21), die dazu bestimmt ist, die Leistungsmodule zu versorgen, indem sie mit einer Versorgungsspannung (Vc) beliefert werden;
- zwei Steuereinheiten (22a, 22b), die dazu geeignet sind, digitale Steuersignale (Sc) zur Steuerung der Elektromotoren für die Module zur digitalen Kommunikation zu erzeugen, die die digitalen Steuersignale an die Leistungsmodule übertragen, so dass jedes Leistungsmodul den Versorgungsstrom aus der Versorgungsspannung und den digitalen Steuersignalen erzeugt, die für es bestimmt sind;
- ein Netzverbindungselement (23), das mit den beiden Steuereinheiten verbunden und in das digitale Netz integriert ist, um die digitalen Steuersignale über das digitale Netz an die Module zur digitalen Kommunikation zu verteilen.

2. Aufbau nach Anspruch 1, bei dem das Netzverbindungselement ein Schalter, ein Router oder ein Konzentrator ist.

3. Aufbau nach Anspruch 1, bei dem jedes Leistungsmodul einen Wechselrichter umfasst.

4. Aufbau nach Anspruch 1, bei dem das digitale Netz (30) ein Ringnetz ist und bei dem das Netzverbindungselement (23) und die Module (26) zur digitalen Kommunikation Entitäten des Ringnetzes sind.

5. Aufbau nach Anspruch 1, bei dem das digitale Netz (40) ein Sternnetz ist und bei dem das Netzverbindungselement (23) ein Knoten des Sternnetzes ist.

6. Aufbau nach Anspruch 5, ferner umfassend ein Verbindungsgehäuse (41), das an der Bremse angebracht ist und mit dem das Netzverbindungselement, die Versorgungseinheit, die Leistungsmodule und die Module zur digitalen Kommunikation verbunden sind.

7. Aufbau nach einem der vorhergehenden Ansprüche, bei dem sich die beiden Steuereinheiten (22a, 22b) und das Netzverbindungselement (23) in ein und demselben Gehäuse befinden.

8. Aufbau nach einem der vorhergehenden Ansprüche, umfassend zwei Versorgungseinheiten (21a, 21b), wobei jede Versorgungseinheit dazu bestimmt ist, eine separate Gruppe von Leistungsmodulen zu versorgen.

9. Aufbau nach einem der vorhergehenden Ansprüche, bei dem die digitalen Aufwärts-Signale (Sm) von der Bremse in Richtung der Steuereinheiten über das digitale Netz übertragen werden.

10. Aufbau nach Anspruch 9, bei dem die digitalen Aufwärts-Signale Messsignale umfassen, die von den Modulen zur digitalen Kommunikation gesendet werden und aus Sensoren stammen, die in die elektromechanischen Aktoren integriert sind.

11. Aufbau nach Anspruch 10, bei dem die integrierten Sensoren Sensoren zur Erfassung der Winkelposition der Rotoren der Elektromotoren und/oder Sensoren zur Erfassung der Versorgungsströme der Elektromotoren und/oder Kraftsensoren umfassen.

12. Aufbau nach Anspruch 9, bei dem die digitalen Aufwärts-Signale Überwachungssignale zur Überwachung der elektromechanischen Aktoren umfassen, die von den Modulen zur digitalen Kommunikation gesendet werden.

13. Aufbau nach Anspruch 9, bei dem die digitalen Aufwärts-Signale Messsignale umfassen, die von einem sich außerhalb der elektromechanischen Aktoren befindlichen externen Sensor gesendet werden, der sich am Rad und/oder der Bremse befindet und in das digitale Netz integriert ist.

14. Aufbau nach Anspruch 13, bei dem der externe Sensor einen Sensor zum Erfassen der Temperatur der Reibelemente der Bremse und/oder einen Sensor zum Erfassen des Druckes eines Reifens des Rades und/oder einen Sensor zum Erfassen einer Drehgeschwindigkeit des Rades und/oder einen Sensor zum Erfassen des Bremsmomentes umfasst.

15. Aufbau nach Anspruch 9, bei dem die digitalen Aufwärts-Signale Statussignale umfassen, die von Blockierelementen zum Blockieren der elektromechanischen Aktoren gesendet werden, die in das digitale Netz integriert sind.

16. Aufbau nach einem der vorhergehenden Ansprüche, bei dem außer den digitalen Steuersignalen zusätzliche digitale Abwärts-Signale (Sd) von den Steuereinheiten in Richtung der Bremse über das digitale Netz übertragen werden.

17. Aufbau nach Anspruch 16, bei dem die zusätzlichen digitalen Abwärts-Signale Funktionstestsignale und/oder Sanktionssignale der elektromechanischen Aktoren umfassen.

18. Aufbau nach Anspruch 17, bei dem die zusätzlichen digitalen Abwärts-Signale Steuersignale zur Steuerung eines anderen Geräts umfassen, das an dem Rad und/oder der Bremse montiert ist.

19. Aufbau nach Anspruch 18, bei dem das andere Gerät ein Lüfter der Bremse ist.

20. Aufbau nach Anspruch 16, bei dem die zusätzlichen digitalen Abwärts-Signale Steuersignale zum Steuern von Blockierelementen der elektromechanischen Aktoren umfassen, die in das digitale Netz integriert sind.

## Claims

1. Architecture of an aircraft braking system, including:
- a brake (20) intended to brake a wheel of the aircraft, the brake including friction members and a plurality of electromechanical actuators (25) for applying a braking force to the friction members and thus exert a braking torque on the wheel, each electromechanical actuator (25) including a body wherein an electric motor is integrated,
**characterised in that**
- into the body are integrated a power module for generating a current supplying the electric motor and a digital communication module (26), the digital communication modules of the electromechanical actuators of the brake being interconnected to form a digital network (30; 40);
and the architecture of the braking system further includes:
- a power supply unit (21) intended to supply the power modules by providing same with a supply voltage (Vc);
- two control units (22a, 22b) adapted to generate digital control signals (Sc) for the electric motors addressed to the digital communication modules which transmit the digital control signals to the power modules so that each power module generates the supply current based on the supply voltage and the digital control signals which are addressed thereto;
- a network interconnection unit (23) connected to the two control units and integrated into the digital network for distributing the digital control signals to the digital communication modules via the digital network.

2. Architecture according to claim 1, wherein the network interconnection unit is a switch or a router or a concentrator.

3. Architecture according to claim 1, wherein each power module includes an inverter.

4. Architecture according to claim 1, wherein the digital network (30) is a ring network and wherein the network interconnection unit (23) and the digital communication modules (26) are entities in the ring network.

5. Architecture according to claim 1, wherein the digital network (40) is a star network and wherein the network interconnection unit (23) is a node of the star network.

6. Architecture according to claim 5, further including a connection casing (41) mounted on the brake and to which the network interconnection unit, the power supply unit, the power modules and the digital communication modules are connected.

7. Architecture according to any one of the preceding claims, wherein both control units (22a, 22b) and the network interconnection unit (23) are situated in the same casing.

8. Architecture according to any one of the preceding claims, including two power supply units (21a, 21b), each power supply unit being intended to supply a separate group of power modules.

9. Architecture according to any one of the preceding claims, wherein uplink digital signals (Sm) are transmitted from the brake to the control units via the digital network.

10. Architecture according to claim 9, wherein the uplink digital signals include measurement signals sent by the digital communication modules and coming from sensors integrated into the electromechanical actuators.

11. Architecture according to claim 10, wherein the integrated sensors comprise sensors for detecting the angular position of the rotors of the electric motors and/or sensors for detecting the currents supplying the electric motors and/or the force sensors.

12. Architecture according to claim 9, wherein the uplink digital signals include signals for monitoring the electromechanical actuators sent by the digital communication modules.

13. Architecture according to claim 9, wherein the uplink digital signals include measurement signals sent by a sensor external to the electromechanical actuators situated on the wheel and/or the brake and integrated into the digital network.

14. Architecture according to claim 13, wherein the external sensor includes a sensor for detecting the temperature of the brake friction members and/or a sensor for detecting the pressure of a tyre of the wheel and/or a sensor for detecting a wheel rotational speed and/or a sensor detecting the braking torque.

15. Architecture according to claim 9, wherein the uplink digital signals include status signals sent by elements for locking the electromechanical actuators which are integrated into the digital network.

16. Architecture according to any one of the preceding claims, wherein, in addition to the digital control signals, additional downlink digital signals (Sd) are transmitted from the control units to the brake via the digital network.

17. Architecture according to claim 16, wherein the additional downlink digital signals include electromechanical actuator functional test command signals and/or sanction command signals.

18. Architecture according to claim 17, wherein the additional downlink digital signals include signals for controlling another item of equipment mounted on the wheel and/or the brake.

19. Architecture according to claim 18, wherein the other item of equipment is a fan of the brake.

20. Architecture according to claim 16, wherein the additional downlink digital signals include signals for controlling elements for locking the electromechanical actuators which are integrated into the digital network.
